(19) Europäisches Patentamt
European Patent Office
Office européen des brevets

(11) EP 2 717 415 A1

(12) EUROPEAN PATENT APPLICATION
published in accordance with Art. 153(4) EPC

(43) Date of publication:
09.04.2014 Bulletin 2014/15

(51) Int Cl.:
H02J 7/00 (2006.01)          H02J 7/02 (2006.01)

(21) Application number: 11866542.1

(22) Date of filing: 03.06.2011

(86) International application number:
PCT/JP2011/003151

(87) International publication number:
WO 2012/164630 (06.12.2012 Gazette 2012/49)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR

(71) Applicant: TOYOTA JIDOSHA KABUSHIKI
KAISHA
Toyota-shi, Aichi-ken, 471-8571 (JP)

(72) Inventor: NISHI, Yuji
Toyota-shi
Aichi 471-8571 (JP)

(74) Representative: Intès, Didier Gérard André et al
Cabinet Beau de Loménie
158, rue de l'Université
75340 Paris Cedex 07 (FR)

(54) **ELECTRICITY STORAGE SYSTEM**

(57) A circulating current flowing between a first electric storage apparatus and a second electric storage apparatus may deteriorate a first relay and a second relay. [SOLVING MEANS] An electric storage system includes a first electric storage apparatus and a second electric storage apparatus each performing charge and discharge, a first relay and a second relay, and a controller. The first relay enables the charge and discharge of the first electric storage apparatus in an ON state and disables them in an OFF state. The second relay enables the charge and discharge of the second electric storage apparatus in an ON state and disables them in an OFF state. The first electric storage apparatus and the first relay are connected in parallel to the second electric storage apparatus and the second relay. The controller switches each of the first relay and the second relay from the ON state to the OFF state after the controller allows a circulating current flowing between the first electric storage apparatus and the second electric storage apparatus.

FIG. 1

**Description**

TECHNICAL FIELD

The present invention relates to an electric storage system including a first electric storage apparatus and a second electric storage apparatus connected in parallel.

BACKGROUND ART

There are systems including two assembled batteries connected in parallel. In such a system, each of the assembled batteries is provided with a relay. The provided relays allow both of the two assembled batteries connected in parallel to be connected to a load or only one of the assembled batteries to be connected to the load.

PRIOR ART DOCUMENTS

PATENT DOCUMENTS

[Patent Document 1] Japanese Patent Laid-Open No. 2009-291016
[Patent Document 2] Japanese Patent Laid-Open No. 2006-325286
[Patent Document 3] Japanese Patent Laid-Open No. 2011-003385

DISCLOSURE OF THE INVENTION

PROBLEMS TO BE SOLVED BY THE INVENTION

In the system including the two assembled batteries connected in parallel, the two assembled batteries may have different open circuit voltages. The connection of the two assembled batteries in parallel may cause a circulating current (inrush current) to flow from one of the assembled batteries with a higher open circuit voltage to the other assembled battery with a lower open circuit voltage. The flow of the circulating current may deteriorate the relay provided for each of the assembled batteries.

MEANS FOR SOLVING THE PROBLEMS

According to the present invention, an electric storage system includes a first electric storage apparatus and a second electric storage apparatus each performing charge and discharge, a first relay and a second relay, and a controller. The first relay switches between an ON state in which the charge and discharge of the first electric storage apparatus are enabled and an OFF state in which the charge and discharge of the first electric storage apparatus are disabled. The second relay switches between an ON state in which the charge and discharge of the second electric storage apparatus are enabled and an OFF state in which the charge and discharge of the second electric storage apparatus are disabled. The first electric storage apparatus and the first relay are connected in parallel to the second electric storage apparatus and the second relay. The controller switches each of the first relay and the second relay from the ON state to the OFF state after the controller allows a circulating current flowing between the first electric storage apparatus and the second electric storage apparatus.

The controller can allow the circulating current until a difference in open circuit voltage between the first electric storage apparatus and the second electric storage apparatus becomes equal to or less than a rated voltage of each of the relays. This can prevent the difference in open circuit voltage from exceeding the rated voltage to avoid the deterioration of the relay.

The electric storage system can include a third relay. The third relay switches between an ON state in which the charge and discharge of each of the first electric storage apparatus and the second electric storage apparatus are enabled and an OFF state in which the charge and discharge of each of the first electric storage apparatus and the second electric storage apparatus are disabled. The controller can switch the first relay and the second relay from the ON state to the OFF state after the controller switches the third relay from the ON state to the OFF state. The switching of the third relay to the OFF state can cause the first electric storage apparatus and the second electric storage apparatus to be released from the connection with a load. At this point, the first relay and the second relay remain in the ON state and the circulating current flows between the first electric storage apparatus and the second electric storage apparatus.

A current sensor detecting the circulating current can be provided. The controller can switch the first relay and the second relay from the ON state to the OFF state when a value of the current detected by the current sensor becomes equal to or less than a threshold value. With the circulating current thus reduced, the difference in open circuit voltage between the first electric storage apparatus and the second electric storage apparatus can be equal to or less than the rated voltage of the relay.

The threshold value can be determined on the basis of the following expression (I):

$$Ith = Vr/(R1+R2) \qquad (I)$$

Ith represents the threshold value, Vr represents the rated voltage of the relay, and R1 and R2 represent the internal resistances of the first electric storage apparatus and the second electric storage apparatus, respectively. Each of the internal resistances R1 and R2 can be the maximum value of the varying internal resistances of each of the electric storage apparatuses. Since the internal resistance varies, the maximum value in the variation range can be used as the internal resistances R1 and R2 to set the threshold value Ith, thereby easily ensuring that the difference in open circuit voltage is equal to or less than the rated voltage of the relay.

The internal resistances R1 and R2 can be changed on the basis of at least one of the temperature and the SOC of each of the electric storage apparatuses. Since the internal resistances R1 and R2 may depend on the temperature or the SOC, the internal resistances R1 and R2 can be changed in association with the temperature and the SOC. This can set the threshold value Ith according to the actual internal resistances R1 and R2.

A time period during which the circulating current flows until the difference in open circuit voltage becomes equal to or less than the rated voltage of the relay can be previously determined, and the time period (set time period) can be stored in a memory. The controller can switch the first relay and the second relay from the ON state to the OFF state when the set time period has elapsed since the circulating current starts to flow. Once the set time period is previously determined, it is only required to measure time to switch the first relay and the second relay to the OFF state.

For example, the set time period can be calculated from the maximum value of the difference in open circuit voltage and the maximum value of a difference in internal resistance between the first electric storage apparatus and the second electric storage apparatus. Once the maximum value of the difference in open circuit voltage and the maximum value of the difference in internal resistance are determined, the time taken for the difference in open circuit voltage to become equal to or less than the rated voltage of the relay can be calculated.

The first electric storage apparatus can be provided by using an electric storage apparatus capable of performing charge and discharge with an electric current larger than that in the second electric storage apparatus. The second electric storage apparatus can be provided by using an electric storage apparatus having an electric storage capacity larger than that in the first electric storage apparatus. Each of the electric storage apparatuses can output an energy for use in running of a vehicle. Thus, at least one of the first electric storage apparatus and the second electric storage apparatus can be used to run the vehicle. Each of the electric storage apparatuses can be provided by using an assembled battery including a plurality of cells connected in series.

ADVANTAGE OF THE INVENTION

According to the present invention, the circulating current is passed between the first electric storage apparatus and the second electric storage apparatus, and then the first relay and the second relay are switched from the ON state to the OFF state. This can reduce the difference in open circuit voltage between the first electric storage apparatus and the second electric storage apparatus. When the first relay and the second relay are switched again to the ON state, the circulating current (inrush current) flowing between the first electric storage apparatus and the second electric storage apparatus can be suppressed, and the deterioration of the relay due to the circulating current (inrush current) can be prevented.

BRIEF DESCRIPTION OF THE DRAWINGS

[Fig. 1] A diagram showing the configuration of a battery system which is Embodiment 1.
[Fig. 2] A flow chart showing the operation of connecting assembled batteries to an inverter in Embodiment 1.
[Fig. 3] A flow chart showing the operation of breaking the connection between the assembled batteries and the inverter in Embodiment 1.
[Fig. 4] A flow chart showing the operation of breaking the connection between assembled batteries and an inverter in a battery system of Embodiment 2.

MODE FOR CARRYING OUT THE INVENTION

Embodiments of the present invention will hereinafter be described.

EMBODIMENT 1

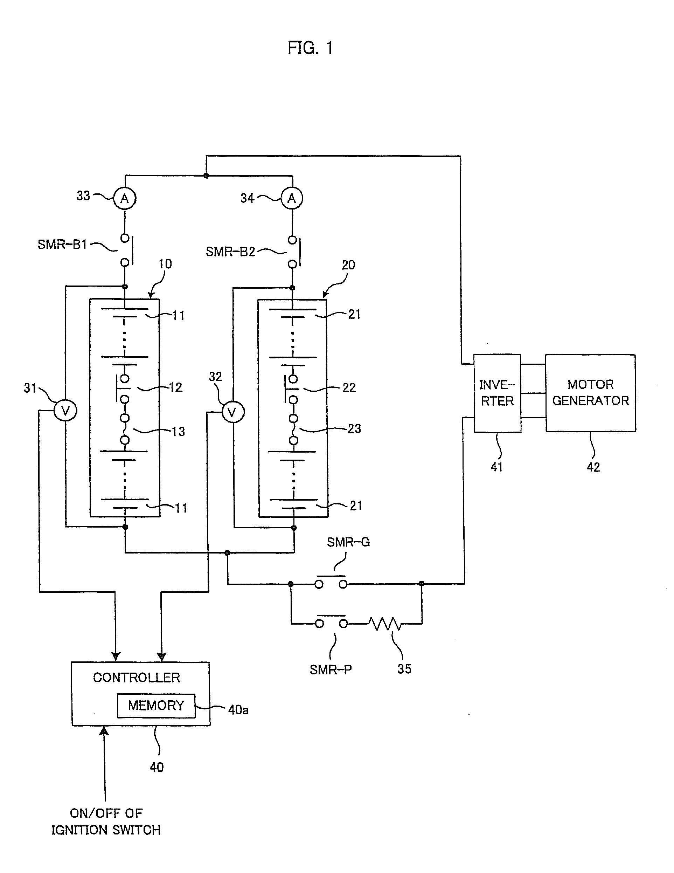

A battery system (corresponding to an electric storage system) which is Embodiment 1 of the present invention is described. Fig. 1 is a diagram showing the configuration of the battery system of the present embodiment. The battery system of the present embodiment can be mounted on a vehicle.

The battery system of the present embodiment has two assembled batteries 10 and 20 connected in parallel. The assembled battery (corresponding to a first electric storage apparatus) 10 has a plurality of cells 11 connected in series. The assembled battery (corresponding to a second electric storage apparatus) 20 has a plurality of cells 21 connected in series. A secondary battery such as a nickel metal hydride battery or a lithium-ion battery can be used as the cells 11 and 21. An electric double layer capacitor may be used instead of the secondary battery.

The numbers of the cells 11 and 21 constituting the assembled batteries 10 and 20, respectively, can be set as appropriate based on the required output and the like. At least one of the assembled batteries 10 and 20 may include cells 11 and 21 connected in parallel. One cell 11 and one cell 21 may be used and connected to each other in parallel.

The assembled batteries 10 and 20 have service plugs (current breakers) 12 and 22, respectively. The service plugs 12 and 22 are used to break electric currents flowing through the assembled batteries 10 and 20. Specifically, the service plugs 12 and 22 can be removed from the assembled batteries 10 and 20 to break current paths in the assembled batteries 10 and 20. The assembled batteries 10 and 20 also have fuses 13 and 23, respectively.

A voltage sensor 31 detects a voltage between terminals (total voltage) of the assembled battery 10 and outputs the detection result to a controller 40. A voltage sensor 32 detects a voltage between terminals (total voltage) of the assembled battery 20 and outputs the detection result to the controller 40. The controller 40 includes a memory 40a. Although the memory 40a is contained in the controller 40 in the present embodiment, the memory 40a may be provided outside the controller 40.

The assembled battery 10 and a system main relay SMR-B1 are connected in parallel to the assembled battery 20 and a system main relay SMR-B2.

The system main relay (corresponding to a first relay) SMR-B1 enables charge and discharge of the assembled battery 10 in an ON state and disables the charge and discharge of the assembled battery 10 in an OFF state. In the present embodiment, the system main relay SMR-B1 is connected to a positive electrode terminal of the assembled battery 10. The system main relay SRM-B1 switches between the ON state and the OFF state in response to a control signal from the controller 40. The controller 40 switches the system main relay SMR-B1 from the OFF state to the ON state to allow the assembled battery 10 to be connected to an inverter 41.

The system main relay (corresponding to a second relay) SMR-B2 enables charge and discharge of the assembled battery 20 in an ON state and disables the charge and discharge of the assembled battery 20 in an OFF state. In the present embodiment, the system main relay SMR-B2 is connected to a positive electrode terminal of the assembled battery 20. The system main relay SRM-B2 switches between the ON state and the OFF state in response to a control signal from the controller 40. The controller 40 switches the system main relay SMR-B2 from the OFF state to the ON state to allow the assembled battery 20 to be connected to the inverter 41.

A current sensor 33 detects a charge or discharge current flowing through the assembled battery 10 and outputs the detection result to the controller 40. A current sensor 34 detects a charge or discharge current flowing through the assembled battery 20 and outputs the detection result to the controller 40.

A system main relay (corresponding to a third relay) SMR-G is connected to negative electrode terminals of the assembled batteries 10 and 20. The system main relay SMR-G switches between an ON state and an OFF state in response to a control signal from the controller 40. A system main relay SMR-P and a limiting resistor 35 are connected in parallel to the system main relay SMR-G. The system main relay SMR-P switches between an ON state and an OFF state in response to a control signal from the controller 40. The limiting resistor 35 is used to suppress the flow of an inrush current at the time of the connection of the assembled batteries 10 and 20 to the inverter 41.

The inverter 41 converts a DC power from the assembled batteries 10 and 20 into an AC power and outputs the AC power to a motor generator 42. A three-phase AC motor can be used as the motor generator 42. The motor generator 42 receives the AC power from the inverter 41 to generate a kinetic energy for running the vehicle. The kinetic energy generated by the motor generator 42 is transferred to wheels.

For decelerating or stopping the vehicle, the motor generator 42 converts a kinetic energy generated in braking of the vehicle into an electric energy. The AC power generated by the motor generator 42 is converted into a DC power by the inverter 41 and then supplied to the assembled batteries 10 and 20. Each of the assembled batteries 10 and 20 can store regenerative power. A charger may be used to charge the assembled batteries 10 and 20. The charger can supply electric power from an external power source (for example, a commercial power source) to the assembled batteries 10 and 20 to charge the assembled batteries 10 and 20.

Although the assembled batteries 10 and 20 are connected to the inverter 41 in the present embodiment, the present invention is not limited thereto. Specifically, at least one of the assembled batteries 10 and 20 can be connected to a step-up circuit (not shown) and the step-up circuit can be connected to the inverter 41. The step-up circuit can increase the output voltage of the assembled batteries 10 and 20 and supply the increased electric power to the inverter 41. The step-up circuit can also drop the output voltage of the inverter 41 and supply the reduced electric power to the assembled batteries 10 and 20.

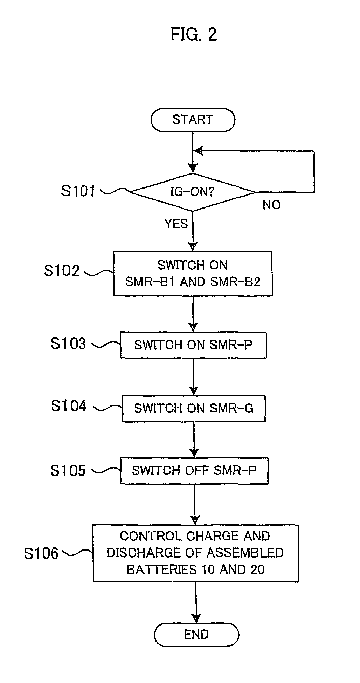

Next, description is made of the operation of connecting the assembled batteries 10 and 20 to the inverter 41 with reference to a flow chart shown in Fig. 2. The processing shown in Fig. 2 is performed by the controller 40. At the start of the processing shown in Fig. 2, the system main relays SMR-B1, SMR-B2, SMR-G, and SMR-P are OFF.

At step S101, the controller 40 determines whether or not an ignition switch of the vehicle is switched from OFF to ON. The information about ON and OFF of the ignition switch is input to the controller 40. When the ignition switch is switched from OFF to ON, the controller 40 proceeds to step S102.

At step S102, the controller 40 switches the systemmain relays SMR-B1 and SMR-B2 from OFF to ON. The system main relays SMR-B1 and SMR-B2 can be switched to ON at different timings.

At step S103, the controller 40 switches the system main relay SMR-P from OFF to ON. The system main relay SMR-P switched ON connects the assembled batteries 10 and 20 to the inverter 41. The charge or discharge current of the assembled batteries 10 and 20 flows through the limiting resistor 35.

The controller 40 switches the system main relay SMR-G from OFF to ON at step S104 and switches the system main relay SMR-P from ON to OFF at step S105. This completes the connection between the assembled batteries 10 and 20 and the inverter 41.

Although both of the assembled batteries 10 and 20 are connected to the inverter 41 in the present embodiment, the present invention is not limited thereto. Specifically, one of the assembled batteries 10 and 20 may be connected to the inverter 41. In this case, the system main relay SMR-B1 (or the system main relay SMR-B2) associated with the assembled battery 10 (or the assembled battery 20) connected to the inverter 41 may be switched from OFF to ON.

At step S106, the controller 40 controls the charge and discharge of the assembled batteries 10 and 20. A known control method may be employed as appropriate for the control of the charge and discharge of the assembled batteries 10 and 20. The charge and discharge of the assembled batteries 10 and 20 can be controlled such that the voltage of each of the assembled batteries 10 and 20 varies within a range from a preset upper limit voltage to a preset lower limit voltage.

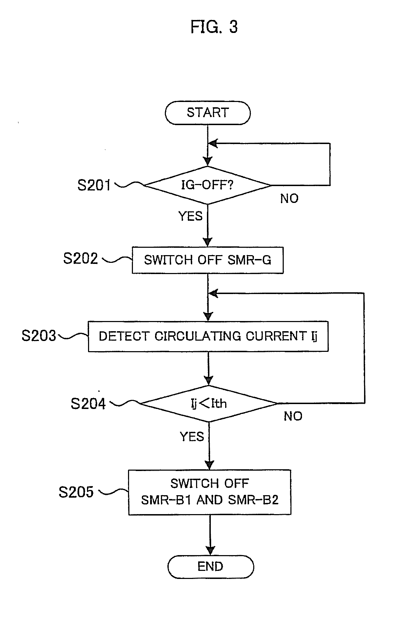

Next, description is made of the operation of breaking the connection between the assembled batteries 10 and 20 and the inverter 41 with reference to a flow chart shown in Fig. 3. The processing shown in Fig. 3 is performed after the processing shown in Fig. 2. The processing shown in Fig. 3 is performed by the controller 40.

At step S201, the controller 40 determines whether or not the ignition switch of the vehicle is switched from ON to OFF. When the ignition switch is switched from ON to OFF, the controller 40 proceeds to step S202.

At step S202, the controller 40 switches the system main relay SMR-G from ON to OFF. This breaks the connection between the assembled batteries 10 and 20 and the inverter 41.

The system main relays SMR-B1 and SMR-B2 remain ON and the assembled batteries 10 and 20 remain connected in parallel. If the assembled batteries 10 and 20 have different open circuit voltages (OCVs), an electric current (circulating current) may flow between the assembled battery 10 and the assembled battery 20. Specifically, the electric current may flow from the assembled battery with a higher open circuit voltage to the assembled battery with a lower open circuit voltage.

At step S203, the controller 40 detects an electric current (circulating current) Ij flowing between the assembled battery 10 and the assembled battery 20 based on the outputs from the current sensors 33 and 34. A possible cause of the difference in OCV between the assembled battery 10 and the assembled battery 20 is described as follows.

The assembled battery 10 and the assembled battery 20 may have different resistances due to a temperature difference, a difference in deterioration state between the cells 11 and 22, and the like. When the assembled batteries 10 and 20 are connected in parallel, the assembled batteries 10 and 20 have an equal closed circuit voltage (CCV). The CCV and the OCV have the relationship represented by the following expression (1):

$$CCV = OCV + IR \qquad (1)$$

where I represents the electric current flowing through each of the assembled batteries 10 and 20, and R represents the internal resistance of each of the assembled batteries 10 and 20.

If the assembled batteries 10 and 20 have different resistances R, the assembled batteries 10 and 20 have different OCVs even when they have an equal CCV. In a configuration in which the processing of voltage equalization is performed in each of the assembled batteries 10 and 20, the independent equalization processing may cause the assembled batteries 10 and 20 to have different OCVs.

If they have different OCVs, the circulating current Ij flows from the assembled battery with the higher OCV to the assembled battery with the lower OCV. If the system main relays SMR-B1 and SMR-B2 are switched from ON to OFF with the OCV difference present, a problem described below may occur.

Specifically, when the system main relays SMR-B1 and SMR-B2 are switched from OFF to ON in response to the next turn-on of the ignition switch, an inrush current flows through the system main relays SMR-B1 and SMR-B2. The flow of the inrush current may apply a thermal load to the system main relays SMR-B1 and SMR-B2 and deteriorate them. When the system main relays SMR-B1 and SMR-B2 are switched from OFF to ON at different timings, the system main relay last switched from OFF to ON experiences such a thermal load due to the inrush current.

The present embodiment prevents the flow of the inrush current through the system main relays SMR-B1 and SMR-B2 which would deteriorate them, as described below.

At step S204, the controller 40 determines whether or not the circulating current Ij detected at step S203 is smaller than a threshold value Ith. When the assembled batteries 10 and 20 have different OCVs, the circulating current Ij flows between the assembled batteries 10 and 20. The circulating current Ij reduces over time.

When the controller 40 determines that the circulating current Ij is smaller than the threshold value Ith, the controller 40 proceeds to step S205. Otherwise, it returns to step S203. The threshold value Ith is determined on the basis of a difference $\Delta V$ in OCV between the assembled batteries 10 and 20 and the rated voltage Vr of the system main relays SMR-B1 and SMR-B2. Specifically, the threshold value Ith is determined as described below.

The difference $\Delta V$ in OCV between the assembled batteries 10 and 20 is represented by the following expression (2):

$$\Delta V = Ij(R1+R2) \qquad (2)$$

In the expression (2), R1 represents the internal resistance of the assembled battery 10, and R2 represents the internal resistance of the assembled battery 20.

If $\Delta V$ is lower than the rated voltage Vr of the system main relays SMR-B1 and SMR-B2, the deterioration of the system main relays SMR-B1 and SMR-B2 can be prevented even when the circulating current flows between the assembled batteries 10 and 20. Specifically, it is necessary to satisfy the condition represented by the following expression (3):

$$\Delta V \leq Vr \qquad (3)$$

The following expression (4) is derived from the expression (2) and the expression (3):

$$Ij \leq Vr/(R1+R2) = Ith \qquad (4)$$

Since the rated voltage Vr of the system main relays SMR-B1 and SMR-B2 can be previously specified, the threshold value Ith can be specified only by previously determining the values of the resistances R1 and R2. The specific numeric value of the threshold value Ith can be set as appropriate within a range satisfying the expression (4). According to the expression (4), the minimum value of the threshold value Ith is calculated from Vr/(R1+R2).

The specific values of the resistances R1 and R2 can be determined by previously measuring possible resistance values of the assembled batteries 10 and 20 in various use environments and using the maximum value of those measured resistance values. The resistances R1 and R2 may be specified on the basis of the temperatures and the states of charge (SOCs) of the assembled batteries 10 and 20.

For example, the resistance R1 can be determined by preparing a map representing the correspondence between the temperature, the SOC, and the resistance R1 of the assembled battery 10 and obtaining the information about the temperature and the SOC of the assembled battery 10. The map can be stored in the memory 40a. When the resistance R1 can be represented as a function of the temperature and the SOC of the assembled battery 10, the function can be used to perform calculations to determine the resistance R1.

To obtain the information about the temperature of the assembled battery 10, a temperature sensor may be provided for the assembled battery 10, for example. To obtain the information about the SOC of the assembled battery 10, the detection result from the voltage sensor 31 can be used to estimate the SOC of the assembled battery 10, or the SOC of the assembled battery 10 can be estimated on the basis of the summed value of the charge and discharge currents of the assembled battery 10. The summed value of the charge and discharge currents can be determined on the basis of the output from the current sensor 33.

The resistance R1 can be determined on the basis of at least one of the temperature and the SOC of the assembled battery 10. The resistance R2 can be determined similarly to the resistance R1. Since the resistances R1 and R2 may depend on the temperatures and the SOCs of the assembled batteries 10 and 20, the temperature and the SOC can be taken into account to use more accurate values for the resistances R1 and R2.

When the circulating current Ij is smaller than the threshold value Ith, the deterioration of the system main relays SMR-B1 and SMR-B2 can be suppressed even when the circulating current flows between the assembled batteries 10 and 20.

At step S205, the controller 40 switches the systemmain relays SMR-B1 and SMR-B2 from ON to OFF. The system main relays SMR-B1 and SMR-B2 can be switched from ON to OFF at different timings.

Although the two assembled batteries 10 and 20 are connected in parallel in the present embodiment, the present invention is not limited thereto. The present invention is applicable to a configuration in which three or more assembled batteries are connected in parallel. In this case, each of the assembled batteries is connected to a system main relay corresponding to the system main relays SMR-B1 and SMR-B2.

When the three or more assembled batteries have different OCVs in the configuration in which the three or more assembled batteries are connected in parallel, a circulating current flows from the assembled battery with a higher OCV to the assembled battery with a lower OCV. Thus, the processing described in Fig. 3 can be performed in the two assembled batteries in which the circulating current flows, thereby preventing the deterioration of the system main relays due to an inrush current.

Although the difference $\Delta V$ in OCV is required to be equal to or less than the rated voltage Vr in the present embodiment, the present invention is not limited thereto. Specifically, it is only required that the circulating current should be passed between the assembled batteries 10 and 20 before the switching of the system main relays SMR-B1 and SMR-B2 from ON to OFF to reduce the difference $\Delta V$ in OCV. The reduced difference $\Delta V$ in OCV can suppress the flow of the circulating current between the assembled batteries 10 and 20 when the system main relays SMR-B1 and SMR-B2 are turned ON again.

Although the assembled batteries 10 and 20 having the same characteristics are used in the present embodiment, the present invention is not limited thereto. For example, a high-power assembled battery can be used for the assembled battery 10, and a high-capacity assembled battery can be used for the assembled battery 20. The high-power assembled battery 10 is an assembled battery capable of charge and discharge with an electric current larger than that in the high-capacity assembled battery 20. The high-capacity assembled battery 20 is an assembled battery having an electric storage capacity larger than that in the high-output assembled battery 10.

When a lithium-ion battery is used for the cells 11 and 21, a negative electrode active material of the cell 11 can be provided by using hard carbon (hardly graphitizable carbon material), and a positive electrode active material of the cell 11 can be provided by using lithium-manganese composite oxide. A negative electrode active material of the cell 21 can be provided by using graphite, and a positive electrode active material of the cell 21 can be provided by using lithium-nickel composite oxide.

When the cell 11 of the high-power assembled battery 10 is compared with the cell 21 of the high-capacity assembled battery 20, the relationship shown in Table 1 below is observed.

[Table 1]

|  | cell characteristics | | electrode characteristics | |
|---|---|---|---|---|
|  | output [W/kg] [W/L] | capacity [Wh/kg] [Wh/L] | output [mA/cm$^2$] | capacity [mAh/g] [mAh/cc] |
| cell 11 (high-power assembled battery) | high | small | high | small |
| cell 21 (high-capacity assembled battery) | low | large | low | large |

In Table 1, the output of each of the cells 11 and 21 can be represented as an electric power per unit mass of each of the cells 11 and 21 (W/kg) or an electric power per unit volume of each of the cells 11 and 21 (W/L), for example. The output of the cell 11 is higher than that of the cell 21. When the cells 11 and 21 have an equal mass or volume, the output (W) of the cell 11 is higher than the output (W) of the cell 21.

The capacity of each of the cells 11 and 21 can be represented as a capacity per unit mass of each of the cells 11 and 21 (Wh/kg) or a capacity per unit volume of each of the cells 11 and 21 (Wh/L), for example. The capacity of cell 21 is larger than that of the cell 11. When the cells 11 and 21 have an equal mass or volume, the capacity (Wh) of the cell 21 is larger than the capacity (Wh) of the cell 11.

In Table 1, the output of an electrode of each of the cells 11 and 21 can be represented as a current value per unit area of the electrode (mA/cm$^2$), for example. The output of the electrode of the cell 11 is higher than that of the cell 21. When the electrodes have an equal area, the value of an electric current passing through the electrode of the cell 11 is higher than the value of an electric current passing through the electrode of the cell 21.

The capacity of the electrode of each of the cells 11 and 21 can be represented as a capacity per unit mass of the electrode (mAh/g) or a capacity per unit volume of the electrode (mAh/cc), for example. The capacity of the electrode of the cell 21 is larger than that of the cell 11. When the electrodes have an equal mass or volume, the capacity of the electrode of the cell 21 is larger than the capacity of the electrode of the cell 11.

Embodiment 2

A battery system which is Embodiment 2 of the present invention is described. The present embodiment differs from Embodiment 1 (Fig. 3) in the processing performed when an ignition switch is switched from ON to OFF. The following description is mainly focused on differences from Embodiment 1. Components identical to those described in Embodiment 1 are designated with the same reference numerals, and description thereof is omitted.

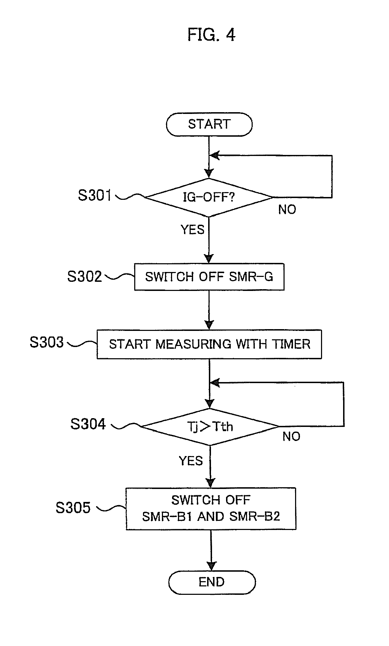

Fig. 4 is a flow chart showing the operation of breaking the connection between the assembled batteries 10 and 20 and the inverter 41 in the battery system of the present embodiment. The processing shown in Fig. 4 is performed by the controller 40.

At step S301, the controller 40 determines whether or not the ignition switch of the vehicle is switched from ON to OFF. When the ignition switch is switched from ON to OFF, the controller 40 proceeds to step S302.

At step S302, the controller 40 switches the system main relay SMR-G from ON to OFF. This breaks the connection between the assembled batteries 10 and 20 and the inverter 41. Since the system main relays SMR-B1 and SMR-B2 remain ON, the assembled battery 10 and the assembled battery 20 remain connected in parallel.

At step S303, the controller 40 starts to measure time by using a timer. In the present embodiment, the controller 40 includes the timer.

At step S304, the controller 40 determines whether or not a time $T_j$ measured by the timer is longer than a threshold value $T_{th}$. Thus, the controller 40 waits until the measured time $T_j$ becomes longer than the threshold value $T_{th}$. When the assembled batteries 10 and 20 have different OCVs, a circulating current flows from the assembled battery with a higher OCV to the assembled battery with a lower OCV.

The threshold value $T_{th}$ can be set as described below.

First, a value $\Delta V_{max}$ representing the maximum difference in OCV between the assembled batteries 10 and 20 is predicted. The voltage difference $\Delta V_{max}$ occurs, for example when the assembled battery 10 is deteriorated most and the assembled battery 20 is deteriorated least. In this case, the resistance of the assembled battery 10 is represented by $R_{max}$, and the resistance of the assembled battery 20 is represented by $R_{min}$. Assuming that the assembled batteries 10 and 20 have an equal resistance $R_{ini}$ in the initial state (immediately after manufacture), the variation between the resistance $R_{max}$ and the resistance $R_{ini}$ is the maximum, and the variation between the resistance $R_{min}$ and the resistance $R_{ini}$ is the minimum.

When an electric current I flows in the assembled batteries 10 and 20, the voltage difference $\Delta V_{max}$ can be represented by the following expression (5):

$$\Delta V_{max} = I(R_{max} - R_{min})/2 \qquad (5)$$

When the voltage difference $\Delta V_{max}$ is equal to or less than the rated voltage $V_r$ of the system main relays SMR-B1 and SMR-B2, the deterioration of the system main relays SMR-B1 and SMR-B2 due to the circulating current (inrush current) flowing between the assembled batteries 10 and 20 can be prevented.

A time taken for the voltage difference $\Delta V_{max}$ to reach the rated voltage $V_r$ can be previously measured and used as the threshold value $T_{th}$. Since the electric current I flowing in the assembled batteries 10 and 20 reduces over time, the time taken for the voltage difference $\Delta V_{max}$ to reach the rated voltage $V_r$ can be previously specified. The previously specified threshold value $T_{th}$ can be stored in the memory 40a.

A voltage difference $\Delta V$ in OCV between the assembled batteries 10 and 20 can be represented by the following expression (6):

$$\Delta V = \Delta V_{max} \times e^{\wedge}(-2kt/(R_{max} + R_{min})) \qquad (6)$$

where ΔVmax represents the maximum value of the difference in OCV between the assembled batteries 10 and 20. ΔVmax is a difference in OCV at the time of switching of the system main relay SMR-G from ON to OFF, k represents a constant, and t represents time. Rmax represents the resistance of the assembled battery 10 when it is deteriorated most, and Rmin represents the resistance of the assembled battery 20 when it is deteriorated least.

The resistances Rmax and Rmin, and the voltage difference ΔVmax can be previously determined to calculate the time t taken for the voltage difference ΔV to reach the rated voltage Vr. The time t serves as the threshold value Tth.

Although the threshold value Tth can be determined with the two (illustrative) methods described above, the present invention is not limited thereto. Specifically, it is only required that the threshold value Tth should be set to the time taken for the difference in OCV between the assembled batteries 10 and 20 to become equal to or less than the rated voltage Vr of the system main relays SMR-B1 and SMR-B2.

When the time Tj measured by the timer is longer than the threshold value Tth, the controller 40 proceeds to step S305. At step S305, the controller 40 switches the system main relays SMR-B1 and SMR-B2 from ON to OFF. The system main relays SMR-B1 and SMR-B2 can be switched from ON to OFF at different timings.

In the present embodiment, similarly to Embodiment 1, the system main relays SMR-B1 and SMR-B2 can be switched from ON to OFF when the difference in OCV between the assembled batteries 10 and 20 is equal to or less than the rated voltage Vr of the system main relays SMR-B1 and SMR-B2. Thus, when the system main relays SMR-B1 and SMR-B2 are switched from OFF to ON in response to the next turn-on of the ignition switch, the deterioration of the system main relays SMR-B1 and SMR-B2 due to the circulating current can be prevented.

**Claims**

1.  An electric storage system comprising:

    a first electric storage apparatus and a second electric storage apparatus each performing charge and discharge;
    a first relay switching between an ON state in which the charge and discharge of the first electric storage apparatus are enabled and an OFF state in which the charge and discharge of the first electric storage apparatus are disabled;
    a second relay switching between an ON state in which the charge and discharge of the second electric storage apparatus are enabled and an OFF state in which the charge and discharge of the second electric storage apparatus are disabled; and
    a controller controlling the ON state and the OFF state of each of the first relay and the second relay,
    wherein the first electric storage apparatus and the first relay are connected in parallel to the second electric storage apparatus and the second relay, and
    the controller switches each of the first relay and the second relay from the ON state to the OFF state after the controller allows a circulating current flowing between the first electric storage apparatus and the second electric storage apparatus.

2.  The electric storage system according to claim 1, wherein the controller allows the circulating current until a difference in open circuit voltage between the first electric storage apparatus and the second electric storage apparatus becomes equal to or less than a rated voltage of each of the relays.

3.  The electric storage system according to claim 1 or 2, further comprising a third relay switching between an ON state in which the charge and discharge of each of the first electric storage apparatus and the second electric storage apparatus are enabled and an OFF state in which the charge and discharge of each of the first electric storage apparatus and the second electric storage apparatus are disabled,
    wherein the controller switches the first relay and the second relay from the ON state to the OFF state after the controller switches the third relay from the ON state to the OFF state.

4.  The electric storage system according to claim 2, further comprising a current sensor detecting the circulating current, wherein the controller switches the first relay and the second relay from the ON state to the OFF state when a value of the current detected by the current sensor becomes equal to or less than a threshold value.

5.  The electric storage system according to claim 4, wherein the threshold value is represented by the following expression (I) :

$$Ith = Vr/(R1+R2) \qquad (I)$$

where Ith represents the threshold value, Vr represents the rated voltage of the relay, and R1 and R2 represent internal resistances of the first electric storage apparatus and the second electric storage apparatus, respectively.

6. The electric storage system according to claim 5, wherein each of the internal resistances R1 and R2 varies in association with at least one of a temperature and an SOC of each of the electric storage apparatuses.

7. The electric storage system according to claim 5, wherein each of the internal resistances R1 and R2 is the maximum value of varying internal resistances of each of the electric storage apparatuses.

8. The electric storage system according to claim 2, further comprising a memory storing, as a set time period, a time period during which the circulating current flows until the difference in open circuit voltage becomes equal to or less than the rated voltage of the relay,
wherein the controller switches the first relay and the second relay from the ON state to the OFF state when the set time period has elapsed since the circulating current starts to flow.

9. The electric storage system according to claim 8, wherein the set time period is a time period calculated from the maximum value of the difference in open circuit voltage and the maximum value of a difference in the internal resistance between the first electric storage apparatus and the second electric storage apparatus.

10. The electric storage system according to any one of claims 1 to 9, wherein the first electric storage apparatus can perform the charge and discharge with an electric current larger than that in the second electric storage apparatus, and the second electric storage apparatus has an electric storage capacity larger than that in the first electric storage apparatus.

11. The electric storage system according to any one of claims 1 to 10, wherein each of the electric storage apparatuses outputs an energy for use in running of a vehicle.

12. The electric storage system according to any one of claims 1 to 11, wherein each of the electric storage apparatuses is an assembled battery including a plurality of cells connected in series.

FIG. 1

FIG. 2

FIG. 3

```
                    ┌──────────┐
                    │  START   │
                    └────┬─────┘
                         │        ┌──────────┐
                         ▼        │          │
        S201 ~     ◇ IG-OFF? ◇────┘          
                         │      NO
                       YES
                         ▼
        S202 ~   ┌─────────────────┐
                 │ SWITCH OFF SMR-G │
                 └────────┬─────────┘
                          │        ┌─────────┐
                          ▼        │         │
        S203 ~ ┌──────────────────────────────┐
               │ DETECT CIRCULATING CURRENT Ij │
               └──────────────┬────────────────┘
                              ▼
        S204 ~        ◇ Ij<Ith ◇──────────────┘
                              │      NO
                            YES
                              ▼
        S205 ~   ┌──────────────────┐
                 │   SWITCH OFF     │
                 │ SMR-B1 AND SMR-B2│
                 └────────┬─────────┘
                          ▼
                    ┌──────────┐
                    │   END    │
                    └──────────┘
```

FIG. 4

<table>
<tr><td colspan="2" align="center"><strong>INTERNATIONAL SEARCH REPORT</strong></td><td>International application No.<br><br>PCT/JP2011/003151</td></tr>
</table>

| A. CLASSIFICATION OF SUBJECT MATTER |
|---|
| *H02J7/00*(2006.01)i, *H02J7/02*(2006.01)i |

According to International Patent Classification (IPC) or to both national classification and IPC

| B. FIELDS SEARCHED |
|---|
| Minimum documentation searched (classification system followed by classification symbols)<br>H02J7/00, H02J7/02 |

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2011 |
| Kokai Jitsuyo Shinan Koho | 1971-2011 | Toroku Jitsuyo Shinan Koho | 1994-2011 |

Electronic data base consulted during the international search (name of data base and, where practicable, search terms used)

| C. DOCUMENTS CONSIDERED TO BE RELEVANT | | |
|---|---|---|
| Category* | Citation of document, with indication, where appropriate, of the relevant passages | Relevant to claim No. |
| Y | JP 2011-72153 A  (Sanyo Electric Co., Ltd.),<br>07 April 2011 (07.04.2011),<br>paragraph [0036]; fig. 4<br>(Family: none) | 1-12 |
| Y | JP 2009-81078 A  (Hitachi, Ltd.),<br>16 April 2009 (16.04.2009),<br>paragraph [0046]; fig. 1<br>(Family: none) | 1-12 |
| A | JP 2009-33936 A  (Toshiba Corp.),<br>12 February 2009 (12.02.2009),<br>claim 1; paragraphs [0002] to [0003]; fig. 1<br>(Family: none) | 1-12 |

☐ Further documents are listed in the continuation of Box C.  ☐ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search<br>    22 August, 2011 (22.08.11) | Date of mailing of the international search report<br>    30 August, 2011 (30.08.11) |
|---|---|
| Name and mailing address of the ISA/<br>    Japanese Patent Office | Authorized officer |
| Facsimile No. | Telephone No. |

Form PCT/ISA/210 (second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009291016 A
- JP 2006325286 A
- JP 2011003385 A